# EUROPEAN PATENT APPLICATION

(11) **EP 4 755 611 A1**
(43) Date of publication of application: **10.06.2026**
(21) Application number: 24880173.0
(22) Date of filing: 18.10.2024
(51) Int. Cl.: B29C 51/26, B29C 51/08, B05B 17/06, B29C 31/00, B29C 51/42, B29B 13/00, B29C 43/36, H01M 50/105

(54) **APPARATUS AND METHOD FOR FORMING POUCH, AND POUCH FOR SECONDARY BATTERY**

(30) Priority: 20.10.2023 KR 20230141479; 17.10.2024 KR 20240142458
(71) Applicant: LG Energy Solution, Ltd., Seoul 07335 (KR)
(72) Inventor: SHIN, Ji Hyun, Daejeon 34122 (KR); HWANG, Soo Ji, Daejeon 34122 (KR); YU, Hyung Kyun, Daejeon 34122 (KR); KANG, Min Hyeong, Daejeon 34122 (KR); SONG, Dae Woong, Daejeon 34122 (KR); KIM, Gi Woung, Daejeon 34122 (KR); LEE, Wan Soo, Daejeon 34122 (KR)
(74) Representative: Plasseraud IP
(86) International application number: PCT/KR2024/015856
(87) International publication number: WO 2025/084836

(57) **Abstract**

A pouch forming apparatus of the present disclosure includes a pouch forming unit to form an accommodation portion for accommodating an electrode assembly in a pouch film; and a water vapor spray unit to spray water vapor toward the pouch film to increase the moisture content of a resin layer included in the pouch film, thereby increasing the elongation. As a result, it may be possible to prevent cracks when forming the pouch film.

## Description

### TECHNICAL FIELD

### CROSS-REFERENCE TO RELATED APPLICATIONS

The present application claims priority to Korean Patent Application No. 10-2023-0141479 filed on October 20, 2023 and Korean Patent Application No. 10-2024-0142458 filed on October 17, 2024 in the Republic of Korea, the disclosures of which are incorporated herein by reference.

### TECHNICAL FIELD

The present disclosure relates to a forming apparatus and method for forming an accommodation portion of a recessed shape in a pouch film, and a pouch for a secondary battery formed thereby.

### BACKGROUND ART

In general, as opposed to primary batteries that cannot be charged, secondary batteries refer to rechargeable batteries, and they are being widely used in the field of high-tech electronic devices including phones, laptop computers and camcorders.

Secondary batteries are classified into can-type secondary batteries in which electrode assemblies are included in metal cans and pouch-type secondary batteries in which electrode assemblies are included in pouches.

A pouch-type secondary battery includes an electrode assembly and a pouch accommodating the electrode assembly, and the electrode assembly has a structure in which a positive electrode and a negative electrode are arranged in an alternating manner with a separator interposed between them. The pouch includes an electrode assembly accommodation portion for accommodating the electrode assembly, and a sealing portion that seals the electrode assembly accommodation portion.

Here, a method for manufacturing the pouch includes a process of preparing a pair of pouch films, a process of forming electrode assembly accommodation portions corresponding to the pair of pouch films, and a process of sealing the edge of the pair of pouch films aligned with each other.

However, the pouch manufacturing method has a cracking problem at the corner of the electrode assembly accommodation portion when forming the pouch film.

[Related Art Document] Patent Publication No. 2023-0016581

### SUMMARY

### TECHNICAL PROBLEM

The present disclosure is directed to providing a pouch forming apparatus and method for increasing the moisture content of a pouch film to increase the elongation of the pouch film, thereby preventing cracks when forming the pouch film.

The present disclosure is further directed to providing a pouch for a secondary battery manufactured by the pouch forming apparatus or method.

### TECHNICAL SOLUTION

A pouch forming apparatus according to an embodiment of the present disclosure may include a pouch forming unit configured to form an accommodation portion having a recessed shape in a pouch film; and a water vapor spray unit configured to spray water vapor toward the pouch film to increase a moisture content of a resin layer included in the pouch film.

The pouch forming unit may include a die having a forming recess in an upper surface on which the pouch film is placed; and a punch disposed above the die, and configured to form the accommodation portion in the pouch film when the punch is inserted into the forming recess. The water vapor spray unit may include a main spray unit to spray the water vapor toward the pouch film placed on the die.

The water vapor spray unit may spray the water vapor of lower temperature than room temperature.

The water vapor spray unit may include an ultrasonic sprayer that breaks down water particles to produce the water vapor and sprays the water vapor using ultrasound.

The pouch film may include an insulation layer, the resin layer, a metal layer and a protective layer arranged in a sequential order. The main spray unit may include a first main sprayer to spray the water vapor toward the insulation layer located at an outermost side of the pouch film; and a second main sprayer to spray the water vapor toward a side of the pouch film.

The water vapor spray unit may spray the water vapor for 30 seconds to 2 minutes.

The forming recess may have a vent hole to vent water droplets formed by agglomeration of the water vapor to outside.

The vent hole may be formed at a corner of the forming recess.

The pouch forming apparatus may further include a drying unit to dry the pouch film to remove moisture contained in the resin layer after the accommodation portion is formed in the pouch film.

The pouch forming apparatus may further include a transport unit to transport the pouch film to place the pouch film on the upper surface of the die. The water vapor spray unit may further include an auxiliary spray unit to spray the water vapor toward the pouch film transported by the transport unit.

A pouch forming method according to an embodiment of the present disclosure may include a spraying step of spraying water vapor toward a pouch film to increase a moisture content of a resin layer included in the pouch film; and a forming step of forming an accommodation portion having a recessed shape in the pouch film.

The spraying step may include spraying the water vapor of lower temperature than room temperature.

The pouch film may include an insulation layer, the resin layer, a metal layer and a protective layer arranged in a sequential order. The spraying step may include spraying the water vapor toward each of the insulation layer located at an outermost side of the pouch film and a side of the pouch film.

The pouch forming method may further include, before the spraying step, a placement step of placing the pouch film on an upper surface of a die having a forming recess. The spraying step may include a main spraying process of spraying the water vapor toward the pouch film placed on the upper surface of the die.

The pouch forming method may further include, before the placement step, a transport step of transporting the pouch film toward the die. The spraying step may further include an auxiliary spraying process of spraying the water vapor toward the pouch film when transporting the pouch film in the transport step.

The forming step may include a venting process of venting water droplets formed by agglomeration of the water vapor and remaining in the forming recess.

The pouch forming method may further include, after the forming step, a drying step of drying the pouch film to remove moisture contained in the resin layer.

A pouch for a secondary battery according to an embodiment of the present disclosure may have an accommodation portion having a recessed shape. The pouch for the secondary battery may include an insulation layer located at an outermost side; a protective layer located at an innermost side; a metal layer located between the insulation layer and the protective layer; and a resin layer located between the insulation layer and the metal layer. A moisture content of the resin layer may be from 700 ppm to 2000 ppm.

The moisture content of the resin layer may be from 1000 ppm to 1500 ppm.

The insulation layer may have a thickness of from 8 µm to 15 µm.

### ADVANTAGEOUS EFFECTS

According to an exemplary embodiment of the present disclosure, the water vapor spray unit of the pouch forming apparatus may spray water vapor toward the pouch film to increase the moisture content of the resin layer included in the pouch film. Accordingly, it may be possible to increase the elongation of the pouch film, thereby preventing cracks when forming the pouch film.

Additionally, the water vapor spray unit may include the main spray unit to spray water vapor toward the pouch film placed on the die. Accordingly, it may be possible to stably increase the moisture content of the pouch film.

Additionally, the main spray unit may include the first main sprayer to spray water vapor toward the insulation layer located at the outermost side, and the second main sprayer to spray water vapor toward the side of the pouch film. Accordingly, it may be possible to stably increase the moisture content of the resin layer.

Additionally, the water vapor spray unit may spray water vapor of lower temperature than room temperature. Accordingly, it may be possible to prevent deformation of the pouch film caused by water vapor.

Additionally, the forming recess of the die of the pouch forming apparatus may have the vent hole to vent water droplets formed by agglomeration of water vapor to the outside. Accordingly, it may be possible to stably form the accommodation portion in the pouch film.

Additionally, the drying unit of the pouch forming apparatus may dry the pouch film having the accommodation portion to remove moisture contained in the resin layer. Accordingly, it may be possible to prevent defects in the subsequent pouch sealing process.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a perspective view showing a secondary battery including a pouch according to an embodiment of the present disclosure.
FIG. 2 is a cross-sectional view showing a pouch according to an embodiment of the present disclosure.
FIG. 3 is an enlarged view of section A in FIG. 2.
FIG. 4 is a process diagram schematically showing a pouch forming apparatus according to an embodiment of the present disclosure.
FIG. 5 is a perspective view showing a main spray unit of a pouch forming apparatus according to an embodiment of the present disclosure.
FIG. 6 is a cross-sectional view showing a vent hole in a pouch forming apparatus according to an embodiment of the present disclosure.
FIG. 7 is a process diagram showing an auxiliary spray unit of a pouch forming apparatus according to an embodiment of the present disclosure.
FIG. 8 is a flowchart showing a pouch forming method according to an embodiment of the present disclosure.

### DETAILED DESCRIPTION

Hereinafter, the embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited to the disclosed embodiments. Additionally, in the drawings, to clearly describe the present disclosure, some elements that are not related to the description are omitted, and throughout the specification, similar reference signs are affixed to similar elements.

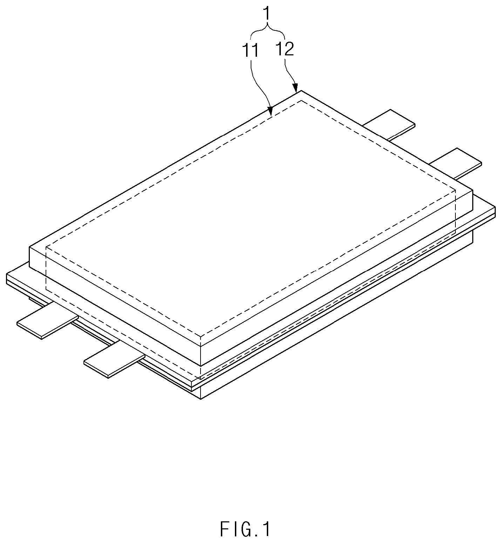

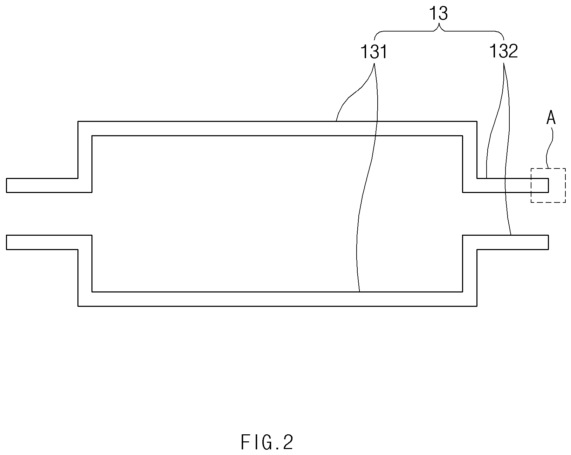

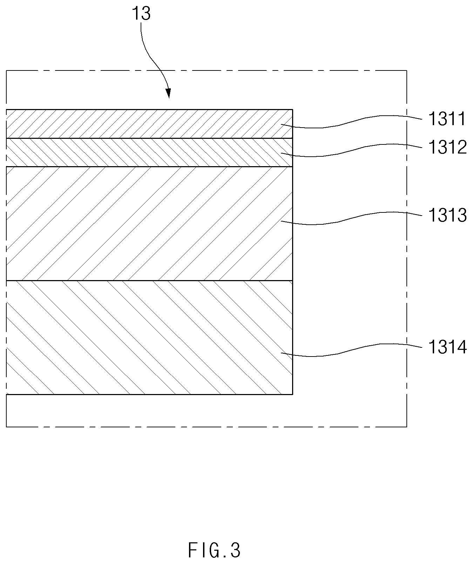

FIG. 1 is a perspective view showing a secondary battery including a pouch according to an embodiment of the present disclosure, FIG. 2 is a cross-sectional view showing the pouch according to an embodiment of the present disclosure, and FIG. 3 is an enlarged view of section A in FIG. 2.

As shown in FIGS. 1 to 3, the secondary battery 1 may include an electrode assembly 11, and the pouch 12 accommodating the electrode assembly 11.

The electrode assembly 11 may have a structure in which a plurality of electrodes and a plurality of separators are arranged in an alternating manner. The plurality of electrodes may include a positive electrode and a negative electrode.

The pouch 12 according to an embodiment of the present disclosure is used for the secondary battery. The pouch 12 may be configured to accommodate the electrode assembly 11, and include a pair of pouch films 13. The pair of pouch films 13 may include an accommodation portion 131 accommodating the electrode assembly 11 and a sealing portion 132 at the edge of the accommodation portion 131.

That is, the accommodation portion 131 formed in one pouch film 13 and the accommodation portion 131 formed in the other pouch film 13 may form an accommodation space for accommodating the electrode assembly 11. The accommodation space may be sealed by joining the sealing portion 132 formed in one pouch film 13 and the sealing portion 132 formed in the other pouch film 13 together by heat.

However, the present disclosure is not limited thereto, and among the pair of pouch films 13, only one pouch film 13 may have the accommodation portion 131. In this case, the other pouch film 13 may be flat. Such an example is known as a 1-cup structure, and will be easily understood by those skilled in the art.

As shown in FIG. 3, the pouch film 13 may include an insulation layer 1311, a resin layer 1312, a metal layer 1313 and a protective layer 1314 arranged in a sequential order. That is, the insulation layer 1311 may be disposed at the outermost side of the pouch film 13, and the protective layer 1314 may be disposed at the innermost side. Additionally, the metal layer 1313 may be located between the insulation layer 1311 and the protective layer 1314. Additionally, the resin layer 1312 may be located between the insulation layer 1311 and the metal layer 1313.

The insulation layer 1311 may include a material having moisture permeability. For example, the insulation layer 1311 may include polyethylene terephthalate.

The resin layer 1312 may include a material capable of easily absorbing moisture. For example, the resin layer 1312 may include nylon.

The metal layer 1313 may include aluminum. The protective layer 1314 may include polypropylene.

However, the present disclosure is not limited thereto, and those skilled in the art may properly select the material of each layer of the pouch film 13 within the known range.

Meanwhile, the pouch 12 may be manufactured by forming the accommodation portion 131 for accommodating the electrode assembly 11 in the pair of pouch films 13. In this instance, a pouch forming apparatus 2 according to an embodiment of the present disclosure may be used.

In particular, the pouch forming apparatus 2 may increase the elongation of the pouch film 13, thereby preventing cracks when forming the accommodation portion 131 in the pouch film 13.

Hereinafter, the pouch forming apparatus according to an embodiment of the present disclosure will be described in detail with reference to the accompanying drawings.

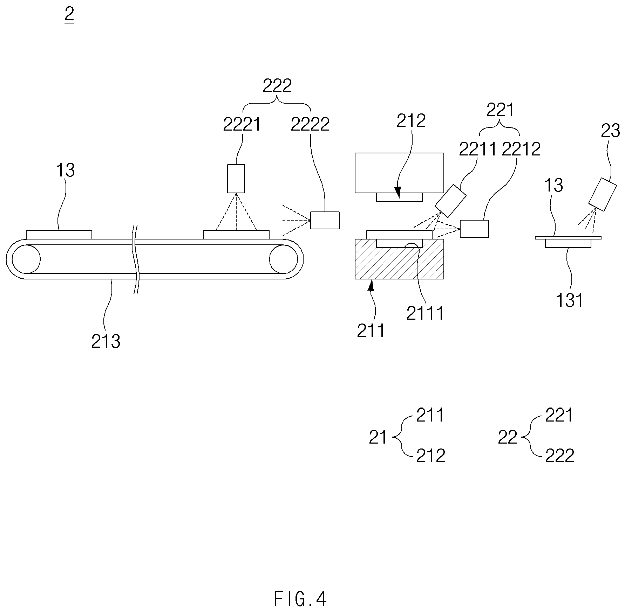

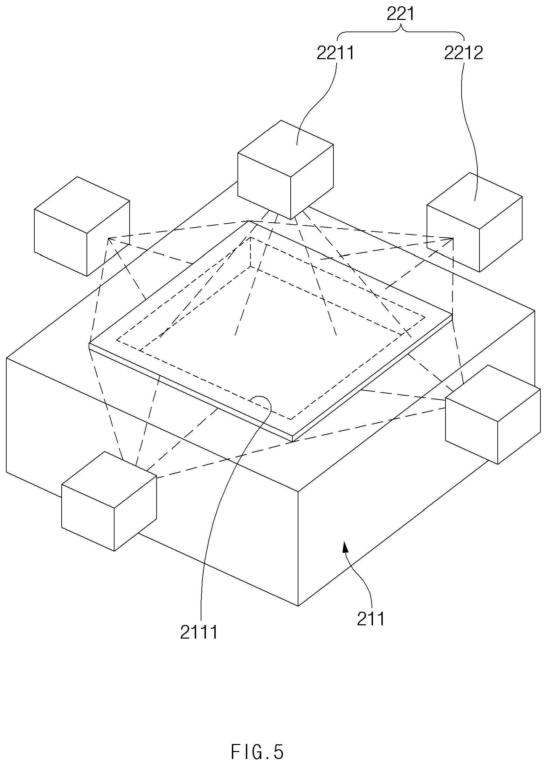

FIG. 4 is a process diagram schematically showing the pouch forming apparatus according to an embodiment of the present disclosure, and FIG. 5 is a perspective view showing a main spray unit of the pouch forming apparatus according to an embodiment of the present disclosure.

As shown in FIGS. 4 and 5, the pouch forming apparatus 2 according to an embodiment of the present disclosure may include a pouch forming unit 21 to form the accommodation portion 131 having a recessed shape in the pouch film 13, and a water vapor spray unit 22 to spray water vapor toward the pouch film 13 to increase the moisture content of the resin layer 1312 included in the pouch film 13.

The pouch forming unit 21 is configured to form the accommodation portion 131 having the recessed shape in the pouch film 13.

That is, the pouch forming unit 21 may include a die 211 having a forming recess 2111 in the upper surface on which the pouch film 13 is placed, and a punch 212 disposed above the die 211 and configured to form the accommodation portion 131 in the pouch film 13 when inserted into the forming recess 2111.

At least part of the punch 212 may plunge into the forming recess 2111, applying pressure to the pouch film 13, and accordingly the accommodation portion 131 may be formed in the pouch film 13.

The water vapor spray unit 22 is used to increase the elongation of the pouch film 13 using water vapor. The water vapor spray unit 22 may be configured to spray water vapor. Here, water vapor includes water in a gas state as well as water in a liquid state that can be sprayed.

That is, the water vapor spray unit 22 may spray water vapor toward the pouch film 13 to increase the moisture content of the resin layer 1312 included in the pouch film 13, thereby increasing the elongation of the pouch film 13.

The water vapor spray unit 22 may include the main spray unit 221 to spray water vapor toward the pouch film 13 placed on the upper surface of the die 211 before forming the pouch film 13.

More specifically, the main spray unit 221 may include a first main sprayer 2211 to spray water vapor toward the insulation layer 1311, and a second main sprayer 2212 to spray water vapor toward the side of the pouch film 13.

When the first main sprayer 2211 sprays water vapor toward the insulation layer 1311 of the pouch film 13, some of the water vapor may pass through the insulation layer 1311 and get into the resin layer 1312, and accordingly the moisture content of the resin layer 1312 may be increased.

When the second main sprayer 2212 sprays water vapor toward the side of the pouch film 13, some of the water vapor may be absorbed into the resin layer 1312 exposed to the side of the pouch film 13, and accordingly the moisture content of the resin layer 1312 may be increased.

In particular, the main spray unit 221 may spray water vapor for a preset time so that the entire resin layer 1312 included in the pouch film 13 may have a set moisture absorption capacity. The set time may be from 30 seconds to 10 minutes. For example, the set time may be approximately 2 minutes. In the case where the set time is 30 seconds or less, moisture absorption into the pouch film 13 may be insufficient, and in the case where the set time is 10 minutes or more, the forming process time may be excessively increased.

The resin layer 1312 of the pouch film 13 may include nylon. The nylon is suitable as the material of the resin layer 1312 because of high tensile strength, abrasion resistance, elasticity and moisture absorption.

The insulation layer 1311 of the pouch film 13 may have a thickness of from 8 µm to 15 µm to increase water vapor permeability. For example, the thickness of the insulation layer 1311 may be approximately 12 µm. In the case where the thickness of the insulation layer 1311 is 8 µm or less, the insulation layer 1311 may be easily damaged by contact with the outside environment, and in the case where the thickness of the insulation layer 1311 is 15 µm or more, it is difficult to increase the moisture content of the resin layer 1312 due to low water vapor permeability.

The resin layer 1312 of the pouch film 13 may have a thickness of from 20 µm to 30 µm. For example, the thickness of the resin layer 1312 may be approximately 25 µm.

The metal layer 1313 of the pouch film 13 may have a thickness of from 45 µm to 75 µm. For example, the thickness of the metal layer 1313 may be approximately 60 µm.

The protective layer 1314 of the pouch film 13 may have a thickness of from 60 µm to 100 µm. For example, the thickness of the protective layer 1314 may be approximately 80 µm.

Those skilled in the art will understand that the thickness range of each layer of the pouch film 13 may be also applied to the pouch 12 according to an embodiment of the present disclosure.

Meanwhile, the water vapor spray unit 22 may spray water vapor having the temperature of 100°C or less. Preferably, the water vapor spray unit 22 may spray water vapor of lower temperature than room temperature. Accordingly, it may be possible to prevent the pouch film 13 from being damaged or deformed by the water vapor.

For example, the water vapor spray unit 22 may include an ultrasonic sprayer that breaks down water particles to produce water vapor and sprays the water vapor using ultrasound.

The water vapor spray unit 22 may increase the elongation of the pouch film 13 by increasing the moisture content of the resin layer 1312 included in the pouch film 13. When the elongation of the resin layer 1312 increases, the elongation of the pouch film 13 increases, thereby preventing cracks when forming the pouch film 13. In other words, it may be possible to prevent the exposure of the metal layer 1313 to the outside environment due to cracks.

More specifically, the moisture content of the resin layer 1312 of the pouch film 13 may be from 700 ppm to 2000 ppm. Preferably, the moisture content of the resin layer 1312 may be from 1000 ppm to 1500 ppm.

In the case where the moisture content of the resin layer 1312 is lower than 700 ppm, the elongation increase effect of the pouch film 13 may be insignificant. Additionally, in view of the elongation increase effect of the pouch film 13, to increase the moisture content of the resin layer 1312 above 2000 ppm, the amount of water vapor sprayed to the pouch film 13 or the spray time may be unnecessarily increased.

Those skilled in the art will understand that the moisture content of the resin layer 1312 of the pouch film 13 may be also applied to the pouch 12 according to an embodiment of the present disclosure.

Meanwhile, in the case where water droplets formed by agglomeration of water vapor that has been sprayed remain in the forming recess 2111 of the die 211, the accommodation portion 131 may not be accurately formed in the pouch film 13. To solve this problem, a vent hole 2112 may be formed in the forming recess 2111 to vent water droplets formed by agglomeration of water vapor to the outside.

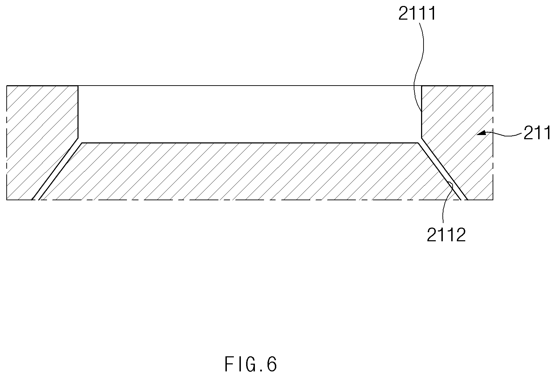

FIG. 6 is a cross-sectional view showing the vent hole in the pouch forming apparatus according to an embodiment of the present disclosure.

The vent hole 2112 may be formed in the forming recess 2111 of the die 211 to vent water droplets formed by agglomeration of water vapor to the outside.

The vent hole 2112 may be formed at the corner of the forming recess 2111. The vent hole 2112 may slide down from the bottom surface of the forming recess 2111 toward the lower surface of the die 211. Accordingly, water droplets remaining in the forming recess 2111 may be effectively removed.

Meanwhile, the pouch forming apparatus 2 may further include a drying unit 23 to dry the pouch film 13 having the accommodation portion 131.

The drying unit 23 may vaporize and remove moisture contained in the resin layer 1312 by increasing the temperature of the pouch film 13 having the accommodation portion 131. Accordingly, it may be possible to prevent the decline of sealability of the pouch film 13 due to moisture when joining the pouch films 13 together by heat in the subsequent process to manufacture the pouch 12.

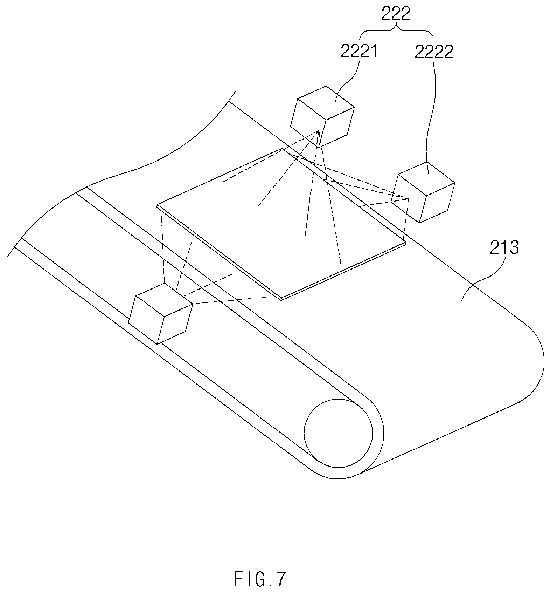

FIG. 7 is a process diagram showing an auxiliary spray unit of the pouch forming apparatus according to an embodiment of the present disclosure.

Meanwhile, the pouch forming apparatus 2 may further include a transport unit 213 to transport the pouch film 13 to place the pouch film 13 on the upper surface of the die 211. For example, the transport unit 213 may include a conveyor belt. However, the configuration of the transport unit 213 is not limited thereto.

The water vapor spray unit 22 may further include the auxiliary spray unit 222 to spray water vapor toward the pouch film 13 transported by the transport unit 213. The auxiliary spray unit 222 may increase the elongation by increasing the moisture content of the resin layer 1312 included in the pouch film 13.

More specifically, the auxiliary spray unit 222 may include a first auxiliary sprayer 2221 to spray water vapor toward the insulation layer 1311 of the pouch film 13 being transported by the transport unit 213 and a second auxiliary sprayer 2222 to spray water vapor toward the side of the pouch film 13.

When the first auxiliary sprayer 2221 sprays water vapor toward the insulation layer 1311, some of the water vapor may pass through the insulation layer 1311 and get into the resin layer 1312, and accordingly the moisture content of the resin layer 1312 may be increased.

When the second auxiliary sprayer 2222 sprays water vapor toward the side of the pouch film 13, some of the water vapor may get into the resin layer 1312 exposed to the side of the pouch film 13, and accordingly the moisture content of the resin layer 1312 may be increased.

Accordingly, the water vapor spray unit 22 may spray water vapor toward the pouch film 13 to increase the moisture content of the resin layer 1312 included in the pouch film 13, thereby increasing the elongation of the pouch and thus, preventing cracks when forming the pouch film 13.

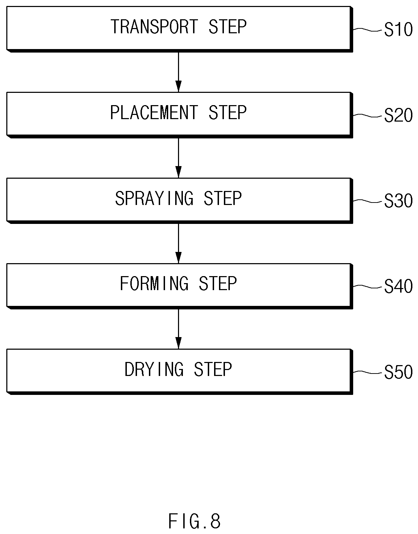

FIG. 8 is a flowchart showing a pouch forming method according to an embodiment of the present disclosure.

The pouch forming method according to an embodiment of the present disclosure may include the steps of: spraying water vapor toward the pouch film 13 to increase the moisture content of the resin layer 1312 included in the pouch film 13 (S30), and forming the accommodation portion 131 having the recessed shape in the pouch film 13 (S40).

The pouch forming method may further include, before the spraying step S30, a placement step S20 of placing the pouch film 13 on the upper surface of the die 211 having the forming recess 2111.

The pouch forming method may further include, before the placement step S20, a transport step S10 of transporting the pouch film 13 toward the die 211.

The pouch forming method may further include, after the forming step S40, a drying step S50 of drying the pouch film 13 to remove moisture contained in the resin layer 1312.

In relation to the pouch forming method, as described above, the pouch film 13 may include the insulation layer 1311, the resin layer 1312, the metal layer 1313 and the protective layer 1314 arranged in a sequential order.

Hereinafter, each step will be described in further detail.

In the transport step S10, the pouch film 13 may be transported to the die 211 using the transport unit 213.

In the placement step S20, the pouch film 13 transported in the transport step S10 may be placed on the upper surface of the die 211. For example, the pouch film 13 may be placed on the upper surface of the die 211 after it is sucked using a movement means (not shown) such as a suction device. As described above, the die 211 may have the forming recess 2111 in the upper surface.

The spraying step S30 may be a step for increasing the moisture content of the resin layer 1312 by spraying water vapor to the pouch film 13 in order to increase the elongation of the pouch film 13. The spraying step S30 may be performed by the water vapor spray unit 22.

The spraying step S30 may include a main spraying process of spraying water vapor toward the pouch film 13 placed on the upper surface of the die 211. The main spraying process may be performed by the main spray unit 221.

The spraying step S30 may further include an auxiliary spraying process of spraying water vapor toward the pouch film 13 during the transport of the pouch film 13 in the transport step S10. The auxiliary spraying process may be performed by the auxiliary spray unit 222.

In the spraying step S30, water vapor may be sprayed toward each of the insulation layer 1311 located at the outermost side of the pouch film 13 and the side of the pouch film 13. When water vapor is sprayed toward the insulation layer 1311, some of the water vapor may pass through the insulation layer 1311 and get into the resin layer 1312, and accordingly the moisture content of the resin layer 1312 may be increased. Additionally, when water vapor is sprayed toward the side of the pouch film 13, some of the water vapor may get into the resin layer 1312 exposed to the side of the pouch film 13, and accordingly the moisture content of the resin layer 1312 may be increased.

More specifically, in the main spraying process, for the pouch film 13 placed on the upper surface of the die 211, the first main sprayer 2211 may spray water vapor toward the insulation layer 1311 of the pouch film 13, and the second main sprayer 2212 may spray water vapor toward the side of the pouch film 13.

More specifically, in the auxiliary spraying process, for the pouch film 13 being transported in the transport step S10, the first auxiliary sprayer 2221 may spray water vapor toward the insulation layer 1311 of the pouch film 13, and the second auxiliary sprayer 2222 may spray water vapor toward the side of the pouch film 13.

Meanwhile, in the spraying step S30, water vapor having lower temperature than 100°C, preferably water vapor having lower temperature than room temperature may be sprayed. This is to prevent deformation of the pouch film 13 caused by water vapor.

In the forming step S40, the punch 212 may form the accommodation portion 131 in the pouch film 13 placed on the die 211. More specifically, in the forming step S40, the punch 212 may move down and plunge into the forming recess 2111 of the die 211, applying pressure to the pouch film 13. Accordingly, a part of the pouch film 13 may be inserted into the forming recess 2111 together with the punch 212 to form the accommodation portion 131 in the pouch film 13.

The forming step S40 may include a venting process of venting water droplets remaining in the forming recess 2111 before forming the pouch film 13. In the venting process, water droplets that are formed by agglomeration of water vapor and remain in the forming recess 2111 may be vented to the outside through the vent hole 2112 formed at the corner of the forming recess 2111.

After the forming step S40, the drying step S50 may include drying the pouch film 13 having the accommodation portion 131 to remove moisture contained in the resin layer 1312.

For example, in the drying step S50, the temperature of the pouch film 13 having the accommodation portion 131 may be increased using a heating means such as a heater. Thus, moisture contained in the resin layer 1312 of the pouch film 13 may be vaporized and removed. Accordingly, it may be possible to prevent the decline of sealability of the pouch film 13 due to moisture when joining the pouch films 13 together by heat in the subsequent process to manufacture the pouch 12.

Accordingly, the pouch forming method according to an embodiment of the present disclosure may significantly reduce the defect ratio of the pouch 12, and manufacture the pouch film 13 of high quality.

Hereinafter, an experiment for investigating elongation and formability as a function of the moisture content of the pouch film 13 will be described.

Here, the pouch film (hereinafter referred to as experimental object) includes the insulation layer 1311, the resin layer 1312, the metal layer 1313 and the protective layer 1314 arranged in a sequential order as described above.

The insulation layer 1311 of the experimental object is made of polyethylene terephthalate, the resin layer 1312 is made of nylon, the metal layer 1313 is made of aluminum, and the protective layer 1314 is made of polypropylene. Additionally, the thickness of the insulation layer 1311 is 12 µm, the thickness of the resin layer 1312 is 25 µm, the thickness of the metal layer 1313 is 60 µm, and the thickness of the protective layer 1314 is 80 µm.

The first experimental condition is that five experiment objects are placed in a dry room free of moisture for 1 day and then the moisture content (ppm) is measured.

The second experimental condition is that five experimental objects are placed in an experiment room of room temperature (20°C to 30°C) for 1 day and then the moisture content (ppm) is measured.

The third experimental condition is that five experimental objects are placed in an experiment room having 60°C and 90% humidity for 10 minutes and then the moisture content (ppm) is measured.

The fourth experimental condition is that five experimental objects are placed in an experiment room having 60°C and 90% humidity for 1 day and then the moisture content (ppm) is measured.

Here, the moisture content of the experimental object having undergone the first to fourth experimental conditions is measured using the commonly used moisture content meter. For example, Rigong International's MOICO-A19 may be used. Additionally, elongation is measured by pulling both ends of the experimental object having undergone the first to fourth experimental conditions.

The five experimental objects used are the same, and indicated by 1 to 5.

As a result of measuring the moisture content and elongation of the experimental objects having undergone the first to fourth experimental conditions, the results may be obtained as shown in the following TABLE 1.

**[TABLE 1]**

| | Experimental object | Pouch film | | | |
|---|---|---|---|---|---|
| | | First experimental condition | Second experimental condition | Third experimental condition | Fourth experimental condition |
| Moisture content (ppm) | 1 | 145 | 1166 | 1750 | 7666 |
| | 2 | 285 | 827 | 1576 | 7429 |
| | 3 | 231 | 1011 | 1547 | 7395 |
| | 4 | 225 | 783 | 1592 | 7361 |
| | 5 | 160 | 1290 | 1506 | 7317 |
| | Average | 209 | 1015 | 1594 | 7434 |
| Elongation (%) | 1 | 63 | 64 | 80 | 82 |
| | 2 | 69 | 72 | 73 | 73 |
| | 3 | 58 | 62 | 83 | 73 |
| | 4 | 73 | 61 | 79 | 83 |
| | 5 | 68 | 65 | 64 | 83 |
| | Average | 66 | 65 | 76 | 79 |

Referring to the above TABLE 1, it was confirmed that the moisture content of the experimental objects was significantly increased in the experiment room having the third and fourth experimental conditions, 60°C and 90% humidity. It can be seen that when the present disclosure sprays water vapor onto the pouch film, the moisture content of the pouch film is increased.

Additionally, it was confirmed that the elongation of the experimental objects having undergone the third and fourth experimental conditions was increased. It can be seen that when the present disclosure sprays water vapor onto the pouch film to increase the moisture content, the elongation is also improved. That is, as the elongation of the pouch film is increased, it may be possible to prevent cracks in the pouch film during the forming.

The scope of the present disclosure is defined by the appended claims rather than the detailed description, and a variety of modifications and variations may be made to the embodiments from the meaning and scope of protection and its equivalent concept.

**[List of Reference Numerals]**

| | | | |
|---|---|---|---|
| 1: | Secondary battery | 11: | Electrode assembly |
| 12: | Pouch | 13: | Pouch film |
| 131: | Accommodation portion | 1311: | Insulation layer |
| 1312: | Resin layer | 1313: | Metal layer |
| 1314: | Protective layer | 132: | Sealing portion |
| 2: | Pouch forming apparatus | 21: | Pouch forming unit |
| 211: | Die | 2111: | Forming recess |
| 2112: | Vent hole | 212: | Punch |
| 213: | Transport unit | 22: | Water vapor spray unit |
| 221: | Main spray unit | 2211: | First main sprayer |
| 2212: | Second main sprayer | 222: | Auxiliary spray unit |
| 2221: | First auxiliary sprayer | 2222: | Second auxiliary sprayer |
| 23: | Drying unit | | |

## Claims

1. A pouch forming apparatus comprising:
a pouch forming unit configured to form an accommodation portion having a recessed shape in a pouch film; and
a water vapor spray unit configured to spray water vapor toward the pouch film to increase a moisture content of a resin layer included in the pouch film.

2. The pouch forming apparatus according to claim 1,
wherein the pouch forming unit includes:
a die having a forming recess in an upper surface on which the pouch film is placed; and
a punch disposed above the die, and configured to form the accommodation portion in the pouch film when the punch is inserted into the forming recess, and
wherein the water vapor spray unit includes a main spray unit to spray the water vapor toward the pouch film placed on the die.

3. The pouch forming apparatus according to claim 1,
wherein the water vapor spray unit sprays water vapor having a temperature lower than room temperature.

4. The pouch forming apparatus according to claim 1,
wherein the water vapor spray unit includes an ultrasonic sprayer that breaks down water into particles to produce the water vapor and sprays the water vapor using ultrasound.

5. The pouch forming apparatus according to claim 2,
wherein the pouch film includes an insulation layer, the resin layer, a metal layer, and a protective layer arranged in a sequential order, and
wherein the main spray unit includes:
a first main sprayer to spray the water vapor toward the insulation layer located at an outermost side of the pouch film; and
a second main sprayer to spray the water vapor toward a side of the pouch film.

6. The pouch forming apparatus according to claim 1,
wherein the water vapor spray unit sprays the water vapor for 30 seconds to 2 minutes.

7. The pouch forming apparatus according to claim 2,
wherein the forming recess has a vent hole to vent water droplets formed by agglomeration of the water vapor to outside.

8. The pouch forming apparatus according to claim 7,
wherein the vent hole is formed at a corner of the forming recess.

9. The pouch forming apparatus according to claim 1, further comprising:
a drying unit to dry the pouch film to remove moisture contained in the resin layer after the accommodation portion is formed in the pouch film.

10. The pouch forming apparatus according to claim 2, further comprising:
a transport unit to transport the pouch film to place the pouch film on the upper surface of the die,
wherein the water vapor spray unit further includes:
an auxiliary spray unit to spray the water vapor toward the pouch film transported by the transport unit.

11. A pouch forming method comprising:
a spraying step of spraying water vapor toward a pouch film to increase a moisture content of a resin layer included in the pouch film; and
a forming step of forming an accommodation portion having a recessed shape in the pouch film.

12. The pouch forming method according to claim 11,
wherein the spraying step comprises spraying the water vapor of lower temperature than room temperature.

13. The pouch forming method according to claim 11,
wherein the pouch film includes an insulation layer, the resin layer, a metal layer and a protective layer arranged in a sequential order, and
wherein the spraying step comprises spraying water vapor toward each of the insulation layer located at an outermost side of the pouch film and a side of the pouch film.

14. The pouch forming method according to claim 11, before the spraying step, further comprising:
a placement step of placing the pouch film on an upper surface of a die having a forming recess,
wherein the spraying step comprises:
a main spraying process of spraying water vapor toward the pouch film placed on the upper surface of the die.

15. The pouch forming method according to claim 14, before the placement step, further comprising:
a transport step of transporting the pouch film toward the die,
wherein the spraying step further comprises:
an auxiliary spraying process of spraying water vapor toward the pouch film when transporting the pouch film in the transport step.

16. The pouch forming method according to claim 14,
wherein the forming step includes:
a venting process of venting water droplets formed by agglomeration of the water vapor and remaining in the forming recess.

17. The pouch forming method according to claim 11, after the forming step, further comprising:
a drying step of drying the pouch film to remove moisture contained in the resin layer.

18. A pouch for a secondary battery, having an accommodation portion with a recessed shape, the pouch for the secondary battery comprising:
an insulation layer located at an outermost side;
a protective layer located at an innermost side;
a metal layer located between the insulation layer and the protective layer; and
a resin layer located between the insulation layer and the metal layer,
wherein a moisture content of the resin layer is from 700 ppm to 2000 ppm.

19. The pouch for the secondary battery according to claim 18,
wherein the moisture content of the resin layer is from 1000 ppm to 1500 ppm.

20. The pouch for the secondary battery according to claim 18,
wherein the insulation layer has a thickness of from 8 µm to 15 µm.
